# EUROPEAN PATENT APPLICATION

(11) **EP 4 682 970 A1**
(43) Date of publication of application: **21.01.2026**
(21) Application number: 24774775.1
(22) Date of filing: 12.03.2024
(51) Int. Cl.: H01M 4/131, H01M 4/36, H01M 4/505, H01M 4/525, H01M 4/62, H01M 10/052, H01M 10/0562

(54) **POSITIVE ELECTRODE FOR ALL-SOLID-STATE SECONDARY BATTERIES, AND ALL-SOLID-STATE SECONDARY BATTERY**

(30) Priority: 17.03.2023 JP 2023042820
(71) Applicant: Maxell, Ltd., Otokuni-Gun, Kyoto 618-8525 (JP)
(72) Inventor: TOMITA, Kentaro, Otokuni-gun, Kyoto 618-8525 (JP); FURUKAWA, Kazuki, Otokuni-gun, Kyoto 618-8525 (JP); KAMIZORI, Haruki, Otokuni-gun, Kyoto 618-8525 (JP); SUEMATSU, Koichi, Fukuoka-shi, Fukuoka 819-0385 (JP); WATANABE, Ken, Fukuoka-shi, Fukuoka 819-0385 (JP); SHIMANOE, Kengo, Fukuoka-shi, Fukuoka 819-0385 (JP)
(74) Representative: Diehl & Partner
(86) International application number: PCT/JP2024/009611
(87) International publication number: WO 2024/195636

(57) **Abstract**

Provided is an all-solid-state secondary battery having a high capacity and excellent heat resistance, and a positive electrode for constituting the all-solid-state secondary battery. The all-solid-state secondary battery according to the present invention is related to Goals 3, 7, 11, and 12 of the SDGs.

The positive electrode for an all-solid-state secondary battery according to the present invention contains a positive electrode active material and a sulfide-based solid electrolyte, and at least a portion of the surface of the positive electrode active material is coated with a coating layer having a composition that contains a compound containing a P-O bond and a compound containing a B-O bond. Also, an all-solid-state secondary battery according to the present invention includes: at least one electrode body in which a negative electrode and a positive electrode face each other with a solid electrolyte layer interposed between the negative electrode and the positive electrode, and the positive electrode is the positive electrode for an all-solid-state secondary battery according to the present invention.

## Description

### Technical Field

The present invention relates to an all-solid-state secondary battery having a high capacity and excellent heat resistance, and a positive electrode for constituting the all-solid-state secondary battery.

### Background Art

In recent years, the development of portable electronic devices such as cellular phones and laptop personal computers, the practical use of electric vehicles, and the like have led to the need for compact and lightweight batteries that have a high capacity and a high energy density.

Currently, in lithium secondary batteries, especially lithium-ion secondary batteries, that can meet this demand, a lithium-containing composite oxide such as lithium cobalt oxide (LiCoO₂) or lithium nickel oxide (LiNiO₂) is used as a positive electrode active material, graphite or the like is used as a negative electrode active material, and an organic electrolyte solution containing an organic solvent and a lithium salt is used as a nonaqueous electrolyte.

Due to further development of devices that use lithium-ion secondary batteries, there is a demand for lithium-ion secondary batteries having an increased life-span, a higher capacity, and a higher energy density, and a high degree of reliability is also required for the lithium-ion secondary batteries having an increased life-span, a higher capacity, and a higher energy density.

However, since an organic electrolyte solution used in a lithium-ion secondary battery contains a flammable organic solvent, the organic electrolyte solution may abnormally generate heat when an abnormal situation such as a short circuit occurs in the battery. In recent years, as the energy density of lithium-ion secondary batteries and the amount of organic solvent in the organic electrolyte solution have increased, there is growing need for reliability in lithium-ion secondary batteries.

Under these circumstances, all-solid-state lithium secondary batteries (all-solid-state secondary batteries) not using organic solvents have also been considered. An all-solid-state lithium secondary battery includes, instead of conventional organic solvent-based electrolytes, a molded body made of a solid electrolyte in which no organic solvents are used, and is highly reliable because there is no risk of abnormally generating heat from the solid electrolyte.

Also, all-solid-state secondary batteries are very safe as well as being highly reliable and highly environmentally resistant, and have an increased life-span. Therefore, it is anticipated that all-solid-state secondary batteries will become maintenance-free batteries that can continue to contribute to the development of society, as well as to safety and security. Providing all-solid-state secondary batteries to society will contribute to reaching the following goals of the 17 Sustainable Development Goals (SDGs) established by the United Nations: Goal 3 (to ensure healthy lives and promote well-being for all people of all ages), Goal 7 (to ensure access for all people to affordable, reliable, sustainable and modern energy), Goal 11 (to achieve inclusive, safe, resilient and sustainable cities and human settlements), and Goal 12 (to ensure sustainable production and consumption patterns).

Sulfide-based solid electrolytes with excellent ion conductivity are often used for solid electrolytes of all-solid-state secondary batteries, but attempts have been made to use a composition containing Li₃PO₄, Li₃BO₃, Li₂SO₄, and the like as a solid electrolyte (Non-Patent Documents 1 to 3).

Also, a molded body made of a positive electrode mixture containing a solid electrolyte, a conductive assistant, and the like together with a positive electrode active material, or a layer of the positive electrode mixture (positive electrode mixture layer) formed on a current collector, or the like is generally used for the positive electrode of an all-solid-state secondary battery. Incidentally, if the positive electrode active material and the solid electrolyte come into direct contact with each other in the positive electrode, the solid electrolyte may be oxidized to form a resistive layer, which may reduce the ion conductivity in the positive electrode. In particular, when a sulfide-based solid electrolyte is used as the solid electrolyte to be contained in the positive electrode mixture, such problems are likely to arise.

On the other hand, in the positive electrode of an all-solid-state secondary battery, studies have also been conducted on providing a coating layer containing a niobium composite oxide such as LiNbO₃ or other oxides such as Al₂O₃ or Li₃PO₄, and the like on the surface of a positive electrode active material (Patent Documents 1 to 4, Non-Patent Documents 4 and 5). By using such a method, it is possible to prevent direct contact between the positive electrode active material and the solid electrolyte, and to suppress a decrease in ion conductivity in the positive electrode due to oxidation of the solid electrolyte.

### Prior Art Documents

### Patent Document

[Patent Document 1] JP 2014-154407A
[Patent Document 2] JP 2016-201342A
[Patent Document 3] WO 2021/221000
[Patent Document 4] JP 2022-83502A

### Non-Patent Document

[Non-Patent Document 1] Journal of Power Sources, 2014, vol. 270, pp. 603-607
[Non-Patent Document 2] Solid State Ionics, 2017, vol. 308, pp. 68-76
[Non-Patent Document 3] Bulletin of the Chemical Society of Japan, 2019, vol. 92, pp. 1100-1106
[Non-Patent Document 4] Solid State Ionics, 2016, vol. 285, pp. 79-82
[Non-Patent Document 5] Nano Letters, 2022, vol. 22, pp. 7477-7483

### Disclosure of Invention

### Problem to be Solved by the Invention

Incidentally, as described above, it is expected that all-solid-state secondary batteries have improved heat resistance due to the use of solid electrolytes instead of organic solvent-based electrolytes, and are therefore to be used in applications such as high-temperature environments, for example. However, in the case of an all-solid-state secondary battery in which a positive electrode containing a positive electrode active material having a coating layer made of LiNbO₃ or Al₂O₃ and a sulfide-based solid electrolyte is used, the inventors of the present invention found that the resistance of the positive electrode is likely to increase due to the progression of the generation of a resistive layer caused by deterioration of the sulfide-based solid electrolyte in the positive electrode, which causes a deterioration in battery characteristics.

On the other hand, in the case of an all-solid-state secondary battery in which a positive electrode active material having a coating layer containing Li₃PO₄ is used, the resistance of the positive electrode is unlikely to increase when the battery is placed in a high-temperature environment. However, since Li₃PO₄ has low lithium (Li) ion conductivity, such an all-solid state secondary battery is problematic in poor battery characteristics such as a high initial resistance (resistance immediately after production) and a small discharge capacity.

The present invention has been accomplished in view of the circumstances described above, and it is an object of the present invention to provide an all-solid-state secondary battery that has a high capacity and excellent heat resistance, and a positive electrode for constituting the all-solid-state secondary battery.

### Means for Solving Problem

A positive electrode for an all-solid-state secondary battery according to the present invention contains a positive electrode active material and a sulfide-based solid electrolyte, and at least a portion of a surface of the positive electrode active material is coated with a coating layer having a composition that contains a compound containing a P-O bond and a compound containing a B-O bond.

Also, an all-solid-state secondary battery according to the present invention includes: at least one stacked body in which a positive electrode and a negative electrode face each other with a solid electrolyte layer interposed between the positive electrode and the negative electrode, and the positive electrode is the positive electrode for an all-solid-state secondary battery according to the present invention.

### Effects of the Invention

According to the present invention, it is possible to provide an all-solid-state secondary battery having a high capacity and excellent heat resistance, and a positive electrode for constituting the all-solid-state secondary battery.

### Brief Description of Drawings

[FIG. 1] FIG. 1 is a cross-sectional view schematically showing an example of an all-solid-state secondary battery according to the present invention.
[FIG. 2] FIG. 2 is a plan view schematically showing another example of an all-solid-state secondary battery according to the present invention.
[FIG. 3] FIG. 3 is a cross-sectional view taken along the line I-I shown in FIG. 2.

### Description of the Invention

### <Positive electrode for all-solid-state secondary battery>

A positive electrode for an all-solid-state secondary battery according to the present invention (may be simply referred to as "positive electrode" hereinafter) contains a positive electrode active material and a sulfide-based solid electrolyte. At least a portion of the surface of the positive electrode active material is coated with a coating layer having a composition that contains a compound containing a P-O bond and a compound containing a B-O bond.

Because LiNbO₃ and Al₂O₃, which are used as materials for the coating layer made of the positive electrode active material in the all-solid-state secondary battery, are oxides whose anions consist only of O²⁻, a side reaction in which electrons are extracted from O²⁻ occurs at voltages of 4.1 V or higher. When such a side reaction occurs, highly reactive oxygen radicals are generated and react with S²⁻ and PS₄³⁻, which are constituent components of a sulfide-based solid electrolyte, thus forming a resistive layer that hinders ion conduction at the interface between the positive electrode active material and the sulfide-based solid electrolyte. Such a resistive layer is likely to be formed when the all-solid-state secondary battery is placed in, in particular, a high-temperature environment. Therefore, when an all-solid-state secondary battery is used in a high-temperature environment, the formation of the resistive layer progresses while the all-solid-state secondary battery is being charged, and the internal resistance increases, thus deteriorating battery characteristics.

On the other hand, as described above, in an all-solid-state secondary battery in which a positive electrode active material having a coating layer containing Li₃PO₄, which is less likely to form a resistive layer described above even in a high-temperature environment is used, the coating layer has poor ion conductivity, resulting in problems that initial battery characteristics (initial discharge capacity, load properties, and the like) deteriorate.

In view of this, in the present invention, when constructing a positive electrode having a positive electrode active material and a sulfide-based solid electrolyte, at least a portion of the surface of the positive electrode active material is coated with a coating layer having a composition that contains a compound containing a P-O bond and a compound containing a B-O bond.

In the coating layer having the composition, unlike a coating layer made of LiNbO₃ or Al₂O₃, a side reaction in which oxygen radicals as described above are generated is unlikely to occur. Therefore, even when an all-solid-state secondary battery having the positive electrode for an all-solid-state secondary battery according to the present invention (all-solid-state secondary battery according to the present invention) is placed in a high-temperature environment at, for example, about 160°C, the formation of a resistive layer at the interface between the positive electrode active material and the sulfide-based solid electrolyte is suppressed, and an increase in internal resistance is suppressed.

Furthermore, for example, Li₃PO₄ has Li-ion conductivity of 10⁻⁸ S/cm order, and a compound having a P-O bond has very low Li-ion conductivity, whereas a composition in which a compound containing a P-O bond and a compound containing a B-O bond coexist has a high Li-ion conductivity of 10⁻⁶ order to 10⁻⁵ S/cm order. Therefore, even when the surface of the positive electrode active material is coated with the composition, Li ions can move smoothly between the positive electrode active materials and between the positive electrode active material and the sulfide-based solid electrolyte, and therefore an increase in the initial resistance of the positive electrode for the all-solid-state secondary battery, and ultimately an increase in the initial internal resistance of the all-solid-state secondary battery is suppressed.

Due to these effects, the positive electrode for an all-solid-state secondary battery according to the present invention can constitute an all-solid-state secondary battery having a high capacity and excellent heat resistance.

Examples of the positive electrode include a positive electrode constituted by a molded body made of a positive electrode mixture containing a positive electrode active material, a sulfide-based solid electrolyte, and the like (a pellet or the like), a positive electrode having a structure in which a layer (a positive electrode mixture layer) constituted by a molded body made of the positive electrode mixture is formed on a current collector, and the like.

Any positive electrode active material used in conventionally known nonaqueous electrolyte secondary batteries, i.e., any active material capable of absorbing and releasing Li ions can be used as the positive electrode active material, and any active material that satisfies the following general formulas (1) to (4) is preferable.

LiCo₁₋ₓM¹ₓO₂ (1)

In the general formula (1), M¹ represents at least one element selected from the group consisting of Al, Mg, Ti, V, Cr, Zr, Fe, Ni, Cu, Zn, Ga, Ge, Nb, Mo, Sn, Sb, and Ba, and x satisfies 0 ≤ x ≤ 0.5.

LiNi_{1-a-b}MnₐM²_{b}O₂ (2)

In the general formula (2), M² represents at least one element selected from the group consisting of Co, Mg, Al, B, Ti, V, Cr, Fe, Cu, Zn, Zr, Mo, Sn, Ca, Sr, and W, and a and b satisfy 0 < a ≤ 1, 0 ≤ b < 1, and 0 < a + b ≤ 1.

LiNi_{1-c}M³_{c}O₂ (3)

In the general formula (3), M³ represents at least one element selected from the group consisting of Al, Mg, Ti, Zr, Fe, Co, Cu, Zn, Ga, Ge, Nb, Mo, Sn, Sb, and Ba, and c satisfies 0 ≤ c ≤ 0.5.

LiM⁴_{d}Mn_{2-d}O₄₋ₑXₑ (4)

In the general formula (4), M⁴ represents at least one element selected from the group consisting of Li, B, Mg, Ca, Sr, Ba, Ti, V, Cr, Fe, Co, Ni, Cu, Al, Sn, Sb, In, Nb, Mo, W, Y, Ru, and Rh, X represents at least one element selected from the group consisting of F, Cl, Br, and S, and d and e satisfy 0 ≤ d ≤ 1.2 and 0 ≤ e ≤ 0.5.

Although the effects of the present invention can be obtained regardless of the type of active material, the higher the potential applied to the positive electrode during charging, the greater the effects.

Note that impurities such as sodium sulfate that are produced during the synthesis of the positive electrode active material may adhere onto the surface of the positive electrode active material, within a range such that effects of the present invention are not hindered.

From the viewpoint of reducing side reactions that cause battery capacity deterioration and increasing the density of the positive electrode, the average particle size of the positive electrode active material is preferably 0.1 µm or more, and more preferably 0.5 µm or more, and preferably 25 µm or less, and more preferably 10 µm or less. Note that the positive electrode active material may be primary particles or secondary particles obtained through aggregation of primary particles. When a positive electrode active material having an average particle size in the above range is used, a large interface with the sulfide-based solid electrolyte contained in the positive electrode can be obtained, thus improving load properties of the all-solid-state secondary battery in which the positive electrode is used.

The term "the average particle size of the positive electrode active material and a later-described solid electrolyte" used in the specification of the present application refers to a 50% diameter value (D₅₀) in a volume-based cumulative fraction when an integral volume is obtained in order from the smallest particle size using a particles size distribution measurement apparatus (Microtrac HRA 9320 available from Nikkiso Co., Ltd., or the like).

At least a portion of the surface of the positive electrode active material is coated with a coating layer having a composition that contains a compound containing a P-O bond and a compound containing a B-O bond.

Specific examples of the compound containing a P-O bond include Li₃PO₄, Li₄P₂O₇, LiTi₂(PO₄)₃, LiLa(PO₃)₄, LiCs(PO₃)₂, and P₂O₅. Specific examples of the compound containing a B-O bond include Li₃BO₃, Li₂B₄O₇, LiBO₂, Li₂B₂O₄, B₂O₃, and LiBa(B₃O₅)₃.

The composition constituting the coating layer preferably further contains a compound containing a S-O bond. In this case, the effect of lowering the initial resistance of the positive electrode, and the effect of increasing the heat resistance of the positive electrode (the effect of suppressing the formation of a resistive layer at the interface between the positive electrode active material and the sulfide-based solid electrolyte in a high-temperature environment) are further improved.

Specific examples of the compound containing a S-O bond include Li₂SO₄ and Li₂S₂O₇.

The coating layer may contain inorganic particles in addition to the composition. When the coating layer contains inorganic particles, the coverage of the surface of the positive electrode active material coated with the coating layer can be easily increased, and effects obtained by forming the coating layer can be further improved.

Specific examples of the inorganic particles contained in the coating layer include Al₂O₃, BaTiO₃, Li₄Ti₅O₁₂, Li₄GeO₄, ZrO₂, Li₂ZrO₃, LiNbO₃, LiTaO₃, WO₃, LiWO₂, MoO₃, and Li₂MoO₄. When the positive electrode active material is coated with oxide particles such as Al₂O₃ particles, the formation of the resistive layer at the interface between the positive electrode active material and the sulfide-based solid electrolyte progresses when the battery, which is being charged, is placed in a high-temperature environment as described. However, when the coating layer is constituted by such oxide particles and the composition that contains the compound containing a P-O bond and the compound having a B-O bond, it has been found that, although the reason therefor is unclear, the formation of a resistive layer at the interface between the positive electrode active material and the sulfide-based solid electrolyte is suppressed even when the battery, which is being charged, is placed in a high-temperature environment.

In the composition constituting the coating layer, a relationship between the content of P (phosphorus) derived from the compound containing a P-O bond and the content of B (boron) derived from the compound containing a B-O bond preferably satisfies P ≥ B in terms of element ratio. When the composition contains the compound containing a P-O bond and the compound containing a B-O bond in such a relationship, the Li ion conductivity of the composition is further improved, and thus the initial resistance of the positive electrode can be further reduced.

In the composition constituting the coating layer, the content of the compound containing a P-O bond and the content of the compound containing a B-O bond are desirable as follows, from the viewpoint of more reliably achieving both a high capacity and improved heat resistance of the all-solid-state secondary battery. Regarding the contents in the compound containing a P-O bond, the P element content is preferably 40 mol% or more, and more preferably 45 mol% or more, and is preferably 95 mol% or less, and more preferably 80 mol% or less, when the total content of the P element, the B element, and the S element is 100 mol%. Regarding the contents in the compound containing a B-O bond, the B element content is preferably 5 mol% or more, and more preferably 10 mol% or more, and is preferably 50 mol% or less, and more preferably 40 mol% or less, when the total content of the P element, the B element, and the S element is 100 mol%.

Furthermore, when the composition constituting the coating layer has a compound containing a S-O bond, regarding the contents in the composition, from the viewpoint of favorably ensuring effects by using the compound containing a S-O bond, the S element content is preferably 1 mol% or more, and more preferably 3 mol% or more, when the total content of the P element, the B element, and the S element is 100 mol%. If the composition constituting the coating layer contains a significantly large amount of the compound containing a S-O bond, the amounts of the compound containing a P-O bond and the compound containing a B-O bond will decrease, which may reduce the effects of these compounds. Therefore, regarding the contents of the compound containing a S-O bond in the composition constituting the coating layer, the S element content is preferably 40 mol% or less, and more preferably 35 mol% or less, when the total content of the P element, the B element, and the S element is 100 mol%.

The content of the composition in the coating layer is preferably 10% by mass or more, and more preferably 20% by mass or more, from the viewpoint of favorably ensuring the effects. Note that the coating layer may be made of only the composition, and therefore the upper limit of the content of the composition in the coating layer is 100% by mass.

When the coating layer contains inorganic particles, the content of the inorganic particles in the coating layer is preferably 3% by mass or more, and more preferably 5% by mass or more, from the viewpoint of favorably ensuring the effects of use thereof. Note that the upper limit of the content of the inorganic particles in the coating layer is desirably set within a range in which the content of the composition in the coating layer satisfies the above-mentioned preferable lower limit.

The components of the coating layer and the composition are analyzed using the following procedure. A cut surface of an electrode is smoothed through ion milling, and element analysis is performed through observation with a field emission electron probe microanalyzer (FE-EPMA) or through observation with an Auger electron microscope. An electrode surface may be subjected to an FIB process to produce a cross section of the electrode, element analysis may be performed using a scanning transmission electron microscope (STEM) and an energy dispersive X-ray spectrometer (EDX) or an electron energy loss spectrometer (EELS). When performing element analysis, it is preferable to observe the areas where the coating layer fills gaps between primary particles of the aggregates of positive electrode active material particles in order to eliminate the influence of P, B, and S, which are constituent components of the solid electrolyte. Element ratios of P, B, and S are calculated from the obtained element ratios.

Even when the thickness of the coating layer interposed between the positive electrode active material particles and the sulfide-based solid electrolyte is thin, the coating layer can prevent direct contact between the positive electrode active material particles and the sulfide-based solid electrolyte. Therefore, it is possible to obtain an effect that an increase in the internal resistance of the all-solid-state secondary battery through oxidation of the sulfide-based solid electrolyte can be suppressed, and an average thickness of the coating layer is preferably 1 nm or more, and more preferably 5 nm or more, from the viewpoint of favorably ensuring effects thereof. If the coating layer is too thick, not only will the effects be saturated, but the Li-ion conductivity at the interface between the positive electrode active materials and the interface between the positive electrode active material and the sulfide-based solid electrolyte, as well as the electron conductivity between the positive electrode active material and the conductive assistant tend to decrease. Therefore, an average thickness of the coating layer is preferably 100 nm or less, and more preferably 30 nm or less.

The average thickness of the coating layer can be measured by performing the component analysis on the coating layer and the composition, as well as by mapping various elements. Specifically, a region containing P, B, and O in an area between a region containing transition metal elements as constituent elements of the positive electrode active material and a region containing S as a constituent element of the solid electrolyte or F, Cl, Br, or I when the solid electrolyte contains a halogen element, is regarded as a coating layer, and then the average thickness of the coating layer can be evaluated by acquiring the arithmetic mean of its thickness. The boundary between the regions is a portion where the intensity of signals attributed to the transition metal elements as constituent elements of the positive electrode active material and S, F, Cl, Br, and I as constituent elements of the solid electrolyte is reduced to half of the average intensity in the bulk.

Also, the coverage of the surface of the positive electrode active material coated with the coating layer (the proportion of the area of a portion of the area of the surface of the positive electrode active material that is coated with the coating layer) is preferably 50% or more, more preferably 70% or more, and particularly preferably 100%, from the viewpoint of favorably ensuring effects of the coating layer.

The coverage thereof coated with the coating layer is calculated as follows: regarding a measurement sample used in the thickness measurement described above, the length of a boundary line where the coating layer and a positive electrode active material particle are in contact with each other is divided by the perimeter of a cross section of the positive electrode active material particle, and this operation is performed on five or more particles of each positive electrode active material, and then the average thereof is used as the coverage.

When forming the coating layer on the positive electrode active material, a method can be employed in which an aqueous solution containing constituent components of the composition (the compound containing a P-O bond, the compound containing a B-O bond, and the like) is prepared, the positive electrode active material is immersed in the aqueous solution, or the aqueous solution is sprayed onto the surface of the positive electrode active material, and thereby the aqueous solution adheres to the surface of the positive electrode active material, and then the solution is dried to remove water.

Also, when forming the coating layer that also contains inorganic particles, a method can be employed in which inorganic particles are caused to adhere to the positive electrode active material surface using a wet or dry method, and then using an aqueous solution containing the composition, the aqueous solution is caused to adhere thereto and is dried using the same method as above. The coverage of the surface of the positive electrode active material coated with the coating layer can be increased by forming the coating layer using such a method.

The content of the positive electrode active material in the positive electrode mixture is preferably 40% by mass to 90% by mass.

Examples of the sulfide-based solid electrolytes according to the positive electrode include particles of Li₂S-P₂S₅-based glass, Li₂S-SiS₂-based glass, Li₂S-P₂S₅-GeS₂-based glass, Li₂S-B₂S₃-based glass, or the like. In addition, it is possible to use thio-LISICON-type sulfide-based solid electrolyte (Li_{12-12g-h+i+6j-k}M⁵_{3+g-h-i-j}M⁶ₕM⁷ᵢM⁸ⱼM⁹₁₂₋ₖXₖ (where M⁵ represents Si, Ge, or Sn, M⁶ represents P or V, M⁷ represents Al, Ga, Y, or Sb, M⁸ represents Zn, Ca, or Ba, M⁹ represents S or any one of S and O, X represents F, Cl, Br, or I, and g, h, i, j, and k satisfy 0 ≤ g < 3, 0 ≤ h + i + j ≤ 3, and 0 ≤ k ≤ 3), such as Li₁₀GeP₂S₁₂ and Li_{9.54}Si_{1.74}P_{1.44}S_{11.7}Cl_{0.3}), and argyrodite-type sulfide-based solid electrolyte (Li₇₋ₖPS₆₋ₖXₖ (where X represents one or more halogen elements, and k satisfies 0.2 < k < 2.0) such as Li₆PS₅Cl, Li₇₋ₘ₊ₙPS₆₋ₒClₒ₊ₚ (where m and n satisfy 0.05 ≤ m ≤ 0.9, -3.0m + 1.8 ≤ n ≤ -3.0m + 5.7), Li_{7-q}PS_{6-q}ClᵣBrₛ (where q, r, and s satisfy q = r + s, 0 < q ≤ 1.8, 0.1 ≤ r/s ≤ 10.0)), which have attracted attention in recent years due to their high lithium-ion conductivity.

Among these sulfide-based solid electrolytes, in particular, argyrodite-type sulfide-based solid electrolytes having high Li ion conductivity and high chemical stability are preferable.

The positive electrode may contain, in addition to the sulfide-based solid electrolyte, a solid electrolyte other than the sulfide-based solid electrolyte (such as a hydride-based solid electrolyte, a halide-based solid electrolyte, or an oxide-based solid electrolyte).

Examples of the hydride-based solid electrolytes include LiBH₄, and solid solutions of LiBH₄ and a following alkali metal compound (e.g., solid solutions in which the mole ratio between LiBH₄ and the alkali metal compound is 1:1 to 20:1). As the alkali metal compound used in the above-mentioned solid solution, at least one selected from the group consisting of lithium halides (such as LiI, LiBr, LiF, and LiCl), rubidium halides (such as RbI, RbBr, RbF, and RbCl), cesium halides (such as CsI, CsBr, CsF, and CsCl), lithium amides, rubidium amides, and cesium amides can be used.

Examples of the halide-based solid electrolyte include monoclinic LiAlCl₄, defect spinel or layered LiInBr₄, and monoclinic Li₆₋₃ₘYₘX₆ (where m satisfies 0 < m < 2, and X = Cl or Br). It is also possible to use known solid electrolytes disclosed in WO 2020/070958 and WO 2020/070955.

Examples of the oxide-based solid electrolytes include Li₂O-Al₂O₃-SiO₂-P₂O₅-TiO₂-based glass ceramics, Li₂O-Al₂O₃-SiO₂-P₂O₅-GeO₂-based glass ceramics, Li₃PO₄-Li₃BO₃-Li₂SO₄-based glass, garnet-type Li₇La₃Zr₂O₁₂, NASICON-type Li_{1+O}Al_{1+O}Ti_{2-O}(PO₄)₃ and Li₁₊ₚAl₁₊ₚGe₂₋ₚ(PO₄)₃, and perovskite-type Li_{3q}La_{2/3-q}TiO₃, inverted perovskite-type Li₃HX (X = O, S, Se, or Te), and the like.

From the viewpoint of reducing grain boundary resistance, the average particle size of the solid electrolyte is preferably 0.1 µm or more, and more preferably 0.2 µm or more. On the other hand, from the viewpoint of forming a sufficient contact interface between the positive electrode active material and the solid electrolyte, the average particle size of the solid electrolyte is preferably 10 µm or less, and more preferably 5 µm or less.

The content of the solid electrolyte in the positive electrode mixture is preferably 5% by mass to 60% by mass. When a solid electrolyte other than the sulfide-based solid electrolytes is also used, a proportion of the sulfide-based solid electrolytes is preferably 50% by mass or more when a total amount of the solid electrolytes in the positive electrode mixture is 100% by mass.

The positive electrode may contain a conductive assistant. Specific examples of the conductive assistant include carbon materials such as graphite (natural graphite, artificial graphite), graphene, carbon black, carbon nanofibers, and carbon nanotubes. The content of the positive electrode mixture is preferably 1% by mass to 10% by mass.

In the positive electrode having a molded body made of the positive electrode mixture, since the molded body contains the sulfide-based solid electrolyte, favorable moldability can be ensured even when the molded body made of the positive electrode mixture does not contain a binder. Therefore, the positive electrode does not need to contain a binder, but may contain a fluororesin such as polyvinylidene fluoride (PVDF) as a binder.

The content of the binder in the positive electrode mixture is preferably 5% by mass or less, more preferably 3% by mass or less, and even more preferably 0% by mass (or in other words, the positive electrode mixture contains no binder).

In the case where the positive electrode includes a current collector, as the current collector, a foil, a punched metal, a mesh, an expanded metal, a foamed metal that are made of a metal such as aluminum, nickel, stainless steel, or the like; a carbon sheet; or the like can be used.

The positive electrode can be formed by, for example, compressing a positive electrode mixture prepared by mixing a positive electrode active material, a sulfide-based solid electrolyte, and the like through compression molding or the like.

In the case where the positive electrode includes a current collector, the positive electrode can be produced by attaching the molded body made of the positive electrode mixture obtained using the above-described method to a current collector through press-bonding or the like.

Also, the positive electrode may also be produced by mixing the above-described positive electrode mixture with a solvent to prepare a positive electrode mixture-containing composition, applying the positive electrode mixture-containing composition onto a substrate such as a current collector or a solid electrolyte layer to be placed to oppose the positive electrode, and then drying and pressing the substrate to form a molded body made of the positive electrode mixture.

As the solvent used in the positive electrode mixture-containing composition, it is preferable to select a solvent that is less likely to deteriorate the solid electrolyte. In particular, a sulfide-based solid electrolyte and a hydride-based solid electrolyte cause a chemical reaction with a minute amount of water, and it is therefore preferable to use a non-polar aprotic solvent as typified by a hydrocarbon solvent such as hexane, heptane, octane, nonane, decane, decaline, toluene, xylene, mestyrene, or tetralin. In particular, it is more preferable to use a super dehydrated solvent with a water content of 0.001% by mass (10 ppm) or less. It is also possible to use a fluorine-based solvent such as Vertrel (registered trademark) available from Du Pont-Mitsui Fluorochemicals Co., Ltd., Zeorora (registered trademark) available from Zeon Corporation Japan, and Novec (registered trademark) available from Sumitomo 3M Ltd., and a non-aqueous organic solvent such as dichloromethane, diethyl ether, or anisole.

The thickness of the molded body made of the positive electrode mixture (in the case where the positive electrode includes a current collector, this refers to the thickness of the molded body of the positive electrode mixture per side of the current collector, and the same applies to the following) is usually 100 µm or more, and from the viewpoint of increasing the capacity of the all-solid-state secondary battery, preferably 200 µm or more. Also, the thickness of the molded body made of the positive electrode mixture is usually 3000 µm or less.

In the case where the electrode is produced by forming a positive electrode mixture layer on a current collector using a positive electrode mixture-containing composition that contains a solvent, the thickness of the positive electrode mixture layer is preferably 10 to 1000 µm.

Since the positive electrode as described above has the coating layer on the surface of the positive electrode active material, two peaks are present in a region from 900 to 950 cm⁻¹ in its Raman spectrum, namely, a peak derived from a compound containing a P-O bond and a peak derived from a compound containing a B-O bond.

The Raman spectrum of the positive electrode can be acquired by observing a polished surface of the electrode using a confocal laser Raman microscope (RAMANTouch available from Nanophoton) and an airtight cell (LIBcell available from Nanophoton). The polished electrode surface can be produced by peeling off the current collector from the positive electrode in a glove box in an Ar gas environment with a dew point of -60°C or lower, or by polishing it off with a coarsegrit polishing film, and lastly polishing it with a polishing film of #4000 or higher. The obtained sample is sealed such that the polished surface of the sample faces a quartz window plate of the airtight cell, and the sample is observed using a laser for excitation with a wavelength of 532 nm and an objective lens with a magnification of 50 times or higher (provided with a glass correction collar). When an observation site is to be determined, it is more preferable to obtain a Raman microscope image of the sample, examine the positions of aggregates of the positive electrode active material from positions where peaks attributed to the positive electrode active material are obtained, and observe observation points of the coating layer in the space between the particles thereof.

Since the positive electrode as described above has the coating layer on the surface of the positive electrode active material, peaks are present at 134 ± 1 eV and 191.5 ± 1 eV in its XPS (X-ray photoelectron spectroscopy) spectrum (a peak derived from the compound containing a P-O bond and a peak derived from the compound containing a B-O bond).

The XPS spectrum of the positive electrode can be acquired as follows. The polished surface of the positive electrode is produced in the same manner as in the measurement of the Raman spectrum, and the battery is fixed to a sample stage using insulating double-sided tape with the polished surface facing up. A conductive metal clip is attached to a sample stage, and the Fermi level between the polished surface and the spectrometer is balanced by pressing a leading end of the clip against the polished surface using an elastic force of the clip. For samples that are significantly affected by the sample being partially charged, measurement may be performed after the charge is neutralized by irradiating the samples with a low-energy electron beam or a low-energy ion beam. In the obtained XPS spectrum, the binding energy is corrected by setting the peak position of the peak attributed to a hydrocarbon adsorbed on the sample surface in the C1s spectrum to 284.8 eV. However, if the intensity of a peak attributed to carbon constituting the conductive assistant is high and the position of the peak attributed to the hydrocarbon adsorbed on the sample surface is unclear even after peak separation, the polished surface of the sample may be subjected to Au sputtering treatment, and the binding energy may be corrected by setting the Au4f peak position to 83.95 eV.

### <All-solid-state secondary battery>

The all-solid-state secondary battery according to the present invention is a battery having at least one stacked body in which a positive electrode and a negative electrode face each other with a solid electrolyte layer interposed between the positive electrode and the negative electrode, and the positive electrode is the positive electrode for an all-solid-state secondary battery according to the present invention. As constituent elements other than the positive electrode, various types of constituent elements used in conventionally known all-solid-state secondary batteries can be used.

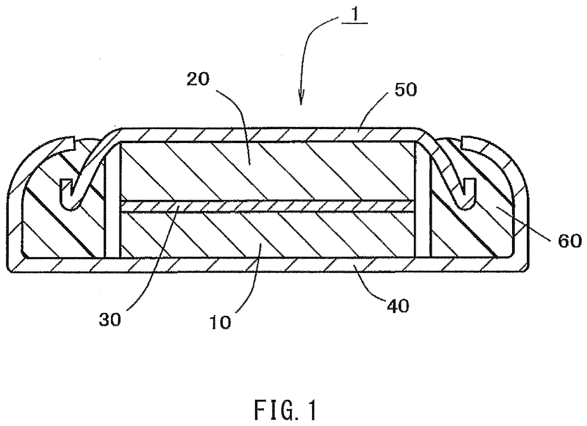

A cross-sectional view schematically showing an example of an all-solid-state secondary battery according to the present invention is shown in FIG. 1. An all-solid-state battery 1 shown in FIG. 1 includes a positive electrode 10, a negative electrode 20, and a solid electrolyte layer 30 interposed between the positive electrode 10 and the negative electrode 20 that are enclosed in an exterior body formed of an exterior can 40, a sealing can 50, and a resin gasket 60 provided between the exterior can 40 and the sealing can 50. The positive electrode 10 is the positive electrode for an all-solid-state secondary battery according to the present invention.

The sealing can 50 is fitted to an opening of the exterior can 40 via the gasket 60, and an opening end of the exterior can 40 is squeezed inward, thereby causing the gasket 60 to abut against the sealing can 50. In this way, the opening of the exterior can 40 is sealed, and thus the inside of the element has a hermetically sealed structure.

The exterior can and the sealing can may be made of, e.g., stainless steel. The gasket may be made of, e.g., polypropylene or nylon. When heat resistance is required in relation to the intended use of the electrochemical device, the gasket may also be made of heat-resistant resin with a melting point of more than 240°C. Examples of the heat-resistance resin include: fluororesins such as a tetrafluoroethylene-perfluoroalkoxyethylene copolymer (PFA); polyphenylene ether (PPE); polysulfone (PSF); polyarylate (PAR); polyether sulfone (PES); polyphenylene sulfide (PPS); and polyetheretherketone (PEEK). Moreover, when the electrochemical device is used for applications requiring heat resistance, the exterior body can be sealed by a glass hermetic seal.

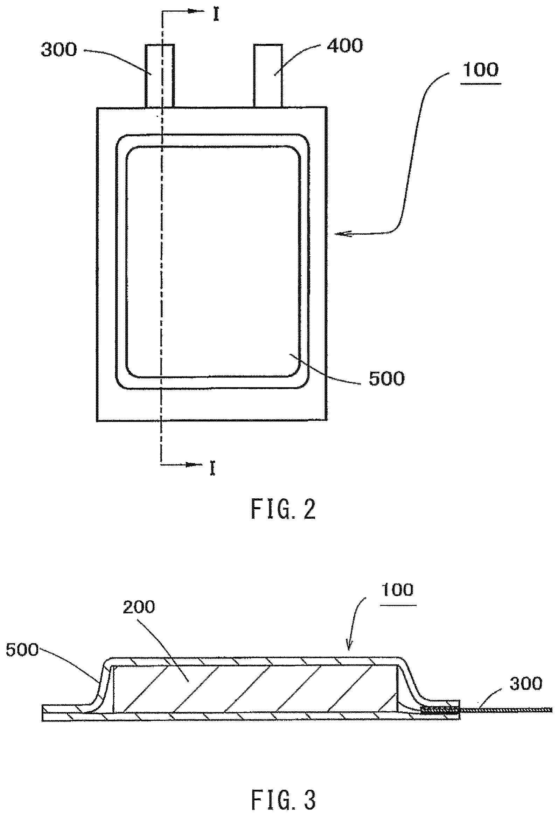

Also, FIGS. 2 and 3 schematically show another example of an all-solid-state secondary battery according to the present invention. FIG. 2 is a plan view of the all-solid-state secondary battery, and FIG. 3 is a cross-sectional view taken along the line I-I shown in FIG. 2.

An all-solid-state secondary battery 100 shown in FIGS. 2 and 3 houses an electrode body 200 constituted by the positive electrode for an all-solid-state secondary battery according to the present invention, the solid electrolyte layer, and the negative electrode, in a laminate-film exterior body 500 formed of two metal laminate films. The laminate-film exterior body 500 is sealed at its outer peripheral portion by heat fusing the upper and lower metal laminate films. In FIG. 3, to avoid making the diagram complicated, the layers that constitute the laminate-film exterior body 500, and the positive electrode, the solid electrolyte layer, and the negative electrode that constitute the electrode body are not shown in a distinguished manner.

The positive electrode included in the electrode body 200 is connected to a positive electrode external terminal 300 in the battery 100. Also, although not shown in the diagram, the negative electrode included in the electrode body 200 is also connected to a negative electrode external terminal 400 in the battery 100. One end of the positive electrode external terminal 300 and one end of the negative electrode external terminal 400 are drawn out of the laminate-film exterior body 500 so as to be connected to external devices and the like.

### (Negative electrode)

The negative electrode of the all-solid-state secondary battery includes, for example, a molded body made of a negative electrode mixture containing a negative electrode active material, a lithium sheet, or a lithium alloy sheet.

In the case where the negative electrode is a molded body made of a negative electrode mixture that contains a negative electrode active material, examples of the negative electrode include a molded body (a pellet or the like) formed by molding the negative electrode mixture, a negative electrode having a structure in which a layer (a negative electrode mixture layer) constituted by a molded body made of the negative electrode mixture is formed on a current collector, and the like.

If the negative electrode has a molded body made of a negative electrode mixture, for example, one of, or a mixture of two or more of, carbon materials capable of absorbing and releasing lithium, such as graphite, pyrolytic carbon, coke, glassy carbon, fired products obtained by firing organic polymer compounds, mesophase carbon microbeads (MCMB), and carbon fibers, is used as the negative electrode active material. Simple substances, compounds, and alloys that include an element such as Si, Sn, Ge, Bi, Sb, or In; compounds that enable charging and discharging at a voltage as low as that in the case of metallic lithium, such as lithium-containing nitrides and lithium-containing oxides; metallic lithium; lithium/aluminum alloys; and the like can also be used as the negative electrode active material. For example, one of, or a mixture of two or more of, metal oxides such as Li₄Ti₅O₁₂, TiO₂, NbO_{2.5-δ} (0 ≤ δ ≤ 0.5), MoO_{3-δ} (0 ≤ δ ≤ 1), WO_{3-δ} (0 ≤ δ ≤ 1), and TiNb₂O₇; and metal sulfides such as WS₂ and MoS₂; can also be used as the negative electrode active material.

The content of the negative electrode active material in the negative electrode mixture is preferably 50% by mass to 95% by mass.

The negative electrode mixture may contain a solid electrolyte. As the solid electrolyte contained in the negative electrode mixture, it is possible to use one or more of the various types of sulfide-based solid electrolytes, hydride-based solid electrolytes, and oxide-based solid electrolytes listed above as examples of the solid electrolyte that can be contained in the positive electrode mixture. Among the solid electrolytes mentioned as the examples, it is more preferable to use a sulfide-based solid electrolyte, and it is even more preferable to use an argyrodite-type sulfide-based solid electrolyte because these solid electrolytes have high Li-ion conductivity and function to increase the moldability of the negative electrode mixture.

The content of the solid electrolyte in the negative electrode mixture is preferably 4% by mass to 70% by mass.

The negative electrode mixture may contain a conductive assistant. Specific examples of the conductive assistant include carbon materials such as graphite (natural graphite, artificial graphite), graphene, carbon black, vapor-grown carbon fibers, carbon nanofibers, and carbon nanotubes. The content of the conductive assistant in the negative electrode mixture is preferably 1% by mass to 10% by mass.

The negative electrode mixture may contain or may not contain a binder. Specific examples thereof include the same binders as those mentioned as examples above as those that can be added to the positive electrode mixture. The negative electrode mixture does not necessarily need to contain a binder when, for example, favorable moldability can be ensured during formation of the molded body made of the negative electrode mixture even without a binder, such as when the negative electrode mixture contains a sulfide-based solid electrolyte.

In the case where a binder is required in the negative electrode mixture, the binder content is preferably 15% by mass or less, and preferably 0.5% by mass or more. On the other hand, in the case where moldability can be obtained without the need for a binder to be contained in the negative electrode mixture, the binder content is preferably 0.5% by mass or less, more preferably 0.3% by mass or less, and even more preferably 0% by mass (i.e., no binder is contained).

In the case where the negative electrode includes a current collector, as the current collector, a foil, a punched metal, a mesh, an expanded metal, a foamed metal that are made of a metal such as copper or nickel; a carbon sheet; or the like can be used.

The molded body made of the negative electrode mixture can be formed by, for example, compressing a negative electrode mixture prepared by mixing a negative electrode active material, a conductive assistant, a solid electrolyte, and a binder added as needed, through compression molding or the like.

In the case where the negative electrode includes a current collector, the negative electrode can be produced by attaching the molded body made of the negative electrode mixture formed using the above-described method to a current collector through press-bonding or the like.

Also, the molded body made of the negative electrode mixture may also be formed by mixing the above-described negative electrode mixture with a solvent to prepare a negative electrode mixture-containing composition, applying the negative electrode mixture-containing composition onto a substrate such as a current collector or a solid electrolyte layer to be placed to oppose the negative electrode, and then drying and pressing the substrate.

As the solvent used in the negative electrode mixture-containing composition, it is desirable to select a solvent that is less likely to deteriorate the solid electrolyte, similar to the solvent used in the positive electrode mixture-containing composition, and it is preferable to use any of the same solvents as those listed above as various examples of the solvent for the positive electrode mixture-containing composition, and it is particularly preferable to use a super-dehydrated solvent having a water content of 0.001% by mass (10 ppm) or less.

The thickness of the molded body made of the negative electrode mixture (in the case where the electrode includes a current collector, this refers to the thickness of the molded body of the negative electrode mixture per side of the current collector, and the same applies to the following) is usually 100 µm or more, and from the viewpoint of increasing the capacity of the all-solid-state secondary battery, preferably 200 µm or more. Also, the thickness of the molded body made of the negative electrode mixture is usually 3000 µm or less.

In the case where the negative electrode is produced by forming a negative electrode mixture layer on a current collector using a negative electrode mixture-containing composition that contains a solvent, the thickness of the negative electrode mixture layer is preferably 10 to 1000 pm.

### (Solid electrolyte layer)

As the solid electrolyte layer in the all-solid-state secondary battery, it is possible to use one or more of the various types of sulfide-based solid electrolytes, hydride-based solid electrolytes, and oxide-based solid electrolytes listed above as examples of the solid electrolyte that can be contained in the positive electrode mixture. Among the solid electrolytes mentioned as the examples, in order to make the battery characteristics more excellent, it is more preferable to use a sulfide-based solid electrolyte, and it is even more preferable to use an argyrodite-type sulfide-based solid electrolyte.

The solid electrolyte layer can be formed using any of the following methods: a method of compressing a solid electrolyte through compression molding or the like; a method of applying a solid electrolyte layer-forming composition prepared by dispersing a solid electrolyte in a solvent onto a substrate, the positive electrode, or the negative electrode, drying the composition, and performing compression molding such as pressing as needed; and the like.

The solid electrolyte layer may include a porous body such as a resin nonwoven fabric as a support.

As the solvent used in the solid electrolyte layer-forming composition, it is desirable to select a solvent that is less likely to deteriorate the solid electrolyte, similar to the solvent for use in the positive electrode mixture-containing composition, it is preferable to use any of the same solvents as those listed above as various examples of the solvent for the positive electrode mixture-containing composition, and it is particularly preferable to use a super-dehydrated solvent having a water content of 0.001% by mass (10 ppm) or less.

The thickness of the solid electrolyte layer is preferably 10 to 500 µm.

### (Electrode body)

The positive electrode and the negative electrode can be used in the battery in the form of a stacked electrode body obtained by stacking the positive electrode and the negative electrode with a solid electrolyte layer interposed therebetween, or a wound electrode body obtained by spirally winding the stacked electrode body.

From the viewpoint of increasing the mechanical strength of the electrode body, it is preferable to form the electrode body by stacking the positive electrode, the negative electrode, and the solid electrolyte layer and then compression molding them.

### (Battery configuration)

The configuration of the all-solid-state secondary battery is not limited to the configuration that includes an exterior body composed of an exterior can, a sealing can, and a gasket as shown in FIG. 1 (i.e., a configuration generally called a coin type battery or a button type battery), or the configuration shown in FIGS. 2 and 3 that includes an exterior body formed using a resin film or a metal-resin laminate film, and the all-solid-state secondary battery may have a configuration that includes an exterior body having a bottomed cylindrical (circular-cylindrical or prismatic) exterior can made of a metal and a sealing structure that seals an opening of the exterior can.

### Examples

Hereinafter, the present invention will be described in detail based on examples. However, the examples given below do not limit the scope of the present invention.

### (Example 1)

### <Production of positive electrode>

### (Production of positive electrode active material)

First, 10.62 g of Li₂CO₃ and 50.75 g of NiMn composite oxide (mole ratio: Ni/Mn = 1/3) were mixed using a vibration mill while air was being added to the mixture, to obtain a precursor for a spinel-type positive electrode active material. The precursor was heated from room temperature to 1000°C at 11°C/min, fired at 1000°C for 1 hour, cooled from 1000°C to 850°C at 1.7°C/min, fired at 850°C for 12 hours, cooled from 850°C to 550°C at 3.0°C/min, fired at 550°C for 12 hours, cooled from 550°C to 200°C at 3.0°C/min, and then naturally cooled from 200°C to room temperature. Thereafter, the resulting precursor was crushed using a mortar and pestle to obtain particles of a spinel-type positive electrode active material (LiNi_{0.5}Mn_{1.5}O₄).

### (Formation of coating layer)

An aqueous solution of citric acid with a concentration of 7.5% by mass was prepared. Then, 4.32 g of the citric acid aqueous solution, 122.4 mg of Li₃PO₄, and 31.2 mg of Li₃BO₃, and 155.0 mg of Al₂O₃ nanoparticles were mixed, ultrasonicated for 1 minute, and then stirred until the mixture become colorless and transparent. The pH of the aqueous solution was adjusted to 7 using ammonia water with a concentration of 10% by mass, and then 0.25 g of ethanol was added to prepare a coating solution.

Then, 5 g of the spinel-type positive electrode active material and the entire amount of the coating solution were introduced into an agate mortar, and the resulting mixture was mixed thoroughly. The agate mortar was placed on a hot plate at 60°C, and the mixture was heated and dried while the mixture was being mixed. The obtained powder was introduced into a crucible made of alumina and subjected to heat treatment. The heat treatment was performed under the following conditions: the temperature was increased from room temperature to 650°C at 2°C/min, the powder was fired at 650°C for 5 hours, the temperature was then lowered from 650°C to 200°C at 2.5°C/min, and then the powder was naturally cooled to room temperature. The obtained powder was crushed using an agate mortar and pestle for 10 minutes to form a coating layer on the surface of spinel-type positive electrode active material particles.

The results of STEM-EELS analysis of a sample piece revealed that in the coating layer with which the surface of the positive electrode active material was coated, when a total content of Li₃PO₄ and Li₃BO₃ in the composition containing Li₃PO₄ and Li₃BO₃ was 100 mol%, the Li₃PO₄ content was 70 mol% and the Li₃BO₃ content was 30 mol% (the relationship between the content of P derived from Li₃PO₄ and the content of B derived from Li₃BO₃ satisfies P ≥ B in terms of element ratio), and the content of each component in the total amount of the coating layer was as follows: the composition containing Li₃PO₄ and Li₃BO₃ was 50% by mass, and Al₂O₃ particles was 50% by mass. The average thickness of the coating layer was 17 nm, and the coverage of the surface of the positive electrode active material coated with the coating layer was 88%.

A positive electrode mixture was prepared by mixing the positive electrode active material whose surface was coated with a coating layer as described above, vapor grown carbon fibers (conductive assistant) and Li₆PS₅Cl (sulfide-based solid electrolyte). The mixing ratio between the positive electrode material, the conductive assistant, and the sulfide-based solid electrolyte was 75:3:22 by mass. 56 mg of the positive electrode mixture was placed in a powder molding mold with a diameter of 7.5 mm, and molded at a pressure of 6000 kgf/cm² using a pressing machine. In this way, a positive electrode made of a circular-cylindrical positive electrode mixture molded body was produced.

The obtained positive electrode had two peaks in the region from 900 to 950 cm⁻¹ in the Raman spectrum, and peaks at 134 ± 1 eV and 191.5 ± 1 eV in the XPS spectrum.

### <Formation of solid electrolyte layer>

A solid electrolyte layer was formed on the positive electrode mixture molded body by placing 8 mg of the same sulfide-based solid electrolyte as that used in the positive electrode on the positive electrode mixture molded body in the powder molding mold, and molding it at a pressure of 1000 kgf/cm² using a pressing machine.

### <Production of negative electrode>

Lithium titanate (Li₄Ti₅O₁₂, negative electrode active material), the same sulfide solid electrolyte as that used in the solid electrolyte layer, and graphene (conductive assistant) were mixed at a mass ratio of 55:36:9, and thoroughly kneaded to prepare a negative electrode mixture. Next, 95 mg of the negative electrode mixture was placed on the solid electrolyte layer in the powder molding mold, and molded at a pressure of 10000 kgf/cm² using a pressing machine to form a negative electrode constituted by a negative electrode mixture molded body on the solid electrolyte layer. In this way, a stacked electrode body in which the positive electrode, the solid electrolyte layer, and the negative electrode were stacked was produced.

### <Assembly of all-solid-state secondary battery>

A flexible graphite sheet "PERMA-FOIL (product name)" with a thickness of 0.1 mm and an apparent density of 1.1 g/cm³ available from Toyo Tanso Co., Ltd. was punched into two sheets of the same size as that of the stacked electrode body. One of the obtained two graphite sheets was placed on the inner bottom of a stainless steel sealing can in which a polypropylene annular gasket was fitted. Next, the stacked electrode body was placed on the graphite sheet, with the negative electrode facing the graphite sheet, and the other graphite sheet was placed on the stacked electrode body. Furthermore, the sealing can was covered with a stainless steel exterior can, and then sealed by inwardly crimping the opening end of the exterior can. In this way, a flat all-solid-state secondary battery with a diameter of about 9 mm in which one of the graphite sheets was placed between the inner bottom of the sealing can and the stacked electrode body, and the other one of the graphite sheets was placed between the inner bottom of the exterior can and the stacked electrode body was produced.

### (Example 2)

Particles of the spinel-type positive electrode active material having the coating layer on their surfaces were obtained in the same manner as in Example 1, except that Al₂O₃ nanoparticles were removed from the composition of the coating solution.

The results of STEM-EELS analysis of a sample piece revealed that in the coating layer with which the surface of the positive electrode active material was coated, when a total content of Li₃PO₄ and Li₃BO₃ in the composition containing Li₃PO₄ and Li₃BO₃ was 100 mol%, the Li₃PO₄ content was 70 mol% and the Li₃BO₃ content was 30 mol% (the relationship between the content of P derived from Li₃PO₄ and the content of B derived from Li₃BO₃ satisfies P ≥ B in terms of element ratio). The average thickness of the coating layer was 10 nm, and the coverage of the surface of the positive electrode active material coated with the coating layer was 75%.

Then, a flat all-solid-state secondary battery was produced in the same manner as in Example 1, except that the positive electrode active material whose surface was coated with a coating layer was used.

### (Example 3)

Particles of the spinel-type positive electrode active material having the coating layer on their surfaces were obtained in the same manner as in Example 1, except that Al₂O₃ nanoparticles were removed from the composition of the coating solution, the heat treatment conditions were changed as follows: the temperature was increased from room temperature to 350°C at 1°C/ min, the powder was fired at 350°C for 5 hours, and the temperature was lowered from 350°C to 200°C at 0.8°C/min.

The results of STEM-EELS analysis of a sample piece revealed that in the coating layer with which the surface of the positive electrode active material was coated, when the total content of Li₃PO₄ and Li₃BO₃ in the composition containing Li₃PO₄ and Li₃BO₃ was 100 mol%, the Li₃PO₄ content was 70 mol% and the Li₃BO₃ content was 30 mol% (the relationship between the content of P derived from Li₃PO₄ and the content of B derived from Li₃BO₃ satisfies P ≥ B in terms of element ratio). The average thickness of the coating layer was 11 nm, and the coverage of the surface of the positive electrode active material coated with the coating layer was 76%.

Then, a flat all-solid-state secondary battery was produced in the same manner as in Example 1, except that the positive electrode active material whose surface was coated with a coating layer was used.

### (Example 4)

Particles of the spinel-type positive electrode active material having the coating layer on their surfaces were obtained in the same manner as in Example 1, except that Al₂O₃ nanoparticles were removed from the composition of the coating solution, and the lithium salts were changed to Li₃PO₄ (96.2 mg), Li₃BO₃ (27.0 mg), and Li₂SO₄ ·H₂O (37.1 mg).

The results of STEM-EELS analysis of a sample piece revealed that in the coating layer with which the surface of the positive electrode active material was coated, when a total content of Li₃PO₄, Li₃BO₃, and Li₂SO₄ in the composition containing Li₃PO₄, Li₃BO₃, and Li₂SO₄ was 100 mol%, the Li₃PO₄ content was 55 mol%, the Li₃BO₃ content was 26 mol%, and the Li₂SO₄ content was 19 mol% (the relationship between the content of P derived from Li₃PO₄ and the content of B derived from Li₃BO₃ satisfies P ≥ B in terms of element ratio). The average thickness of the coating layer was 10 nm, and the coverage of the surface of the positive electrode active material coated with the coating layer was 75%.

Then, a flat all-solid-state secondary battery was produced in the same manner as in Example 1, except that the positive electrode active material whose surface was coated with a coating layer was used.

### (Example 5)

Particles of the spinel-type positive electrode active material having the coating layer on their surfaces were obtained in the same manner as in Example 1, except that Al₂O₃ nanoparticles were removed from the composition of the coating solution, the amount of citric acid solution was changed to 23.8 g, and the lithium salts were changed to Li₃PO₄ (385.8 mg), Li₃BO₃ (229.3 mg), and Li₂SO₄ ·H₂O (215.3 mg).

The results of STEM-EELS analysis of a sample piece revealed that in the coating layer with which the surface of the positive electrode active material was coated, when the total content of Li₃PO₄, Li₃BO₃, and Li₂SO₄ in the composition containing Li₃PO₄, Li₃BO₃, and Li₂SO₄ was 100 mol%, the Li₃PO₄ content was 40 mol%, the Li₃BO₃ content was 40 mol%, and the Li₂SO₄ content was 20 mol% (the relationship between the content of P derived from Li₃PO₄ and the content of B derived from Li₃BO₃ satisfies P ≥ B in terms of element ratio). The average thickness of the coating layer was 55 nm, and the coverage of the surface of the positive electrode active material coated with the coating layer was 80%.

Then, a flat all-solid-state secondary battery was produced in the same manner as in Example 1, except that the positive electrode active material whose surface was coated with a coating layer was used.

### (Comparative Example 1)

A flat all-solid-state secondary battery was produced in the same manner as in Example 1, except that the same LiNi_{0.5}Mn_{1.5}O₄ as used in Example 1 was used as a positive electrode active material without providing a coating layer.

### (Comparative Example 2)

In an agate mortar, 5 g of LiNi_{0.5}Mn_{1.5}O₄ and 0.155 g of Al₂O₃ nanoparticles were mixed for 40 minutes, and the mixture was subjected to the same heat treatment as in Example 1, and then crushed using the agate mortar and pestle for 10 minutes to obtain a positive electrode active material.

A flat all-solid-state secondary battery was produced in the same manner as in Example 1, except that LiNi_{0.5}Mn_{1.5}O₄ whose surface was coated with Al₂O₃ nanoparticles as described above was used as the positive electrode active material.

### (Comparative Example 3)

Particles of the spinel-type positive electrode active material having the coating layer on their surfaces were obtained in the same manner as in Example 1, except that Al₂O₃ nanoparticles were removed from the composition of the coating solution, and the lithium salts were changed to only Li₃PO₄ (175 mg).

A flat all-solid-state secondary battery was produced in the same manner as in Example 1, except that LiNi_{0.5}Mn_{1.5}O₄ whose surface was coated with Li₃PO₄ as described above was used as the positive electrode active material.

The flat all-solid-state secondary batteries of the examples and comparative examples were subjected to the following evaluation tests.

### <Evaluation of initial characteristics>

Each of the flat all-solid-state secondary batteries of the examples and comparative examples was subjected to constant current charging at a current value of 0.07 C to a voltage of 3.5 V, constant voltage charging to a current value of 0.01 C, open end voltage measurement for 1 hour, and discharging at a current value of 0.07 C to a voltage of 1.5 V to measure the discharge capacity at this time (initial capacity).

The voltage measured at one second after the start of the initial discharging was subtracted from the open end voltage after the open end voltage measurement, and the direct current resistance (DCR) was calculated from the resulting voltage value.

### <Evaluation of heat resistance>

Immediately after the production of the flat all-solid-state secondary batteries of the examples and the comparative examples (batteries different from those used to evaluate the initial characteristics), each battery was placed in a constant-temperature oven at 150°C and held therein for 30 minutes, and then taken out from the constant-temperature oven and allowed to cool to room temperature. Then, the DCR increase rate was determined by measuring the DCR of each battery under the same conditions as in the evaluation of initial characteristics, dividing the obtained value by the DCR in the evaluation of the initial characteristics, and representing the obtained value as a percentage.

The results are shown in Table 1. In Table 1, the initial capacity is shown as a relative value when the value of the battery of Comparative Example 3 was set to 100.

**[Table 1]**

| | Initial Characteristics | | Heat Resistance | |
|---|---|---|---|---|
| | Discharge Capacity | DCR (Ω) | DCR (Ω) | DCR Increase Rate (%) |
| Ex. 1 | 102 | 1226 | 1793 | 146 |
| Ex. 2 | 107 | 1134 | 2270 | 200 |
| Ex. 3 | 116 | 1415 | 1617 | 114 |
| Ex. 4 | 123 | 1347 | 1173 | 87 |
| Ex. 5 | 100 | 1056 | 1742 | 165 |
| Comp. Ex. 1 | 92 | 1102 | 3433 | 312 |
| Comp. Ex. 2 | 81 | 1426 | 3842 | 269 |
| Comp. Ex. 3 | 100 | 836 | 2990 | 358 |

The flat all-solid-state secondary batteries of Examples 1 to 5 in which the positive electrodes containing corresponding positive electrode active materials whose surfaces were coated with coating layers having compositions containing appropriate components were superior to the batteries of Comparative Examples 1 to 3 in both the discharge capacity as an initial characteristic and the DCR increase rate as a heat resistance characteristic. In the positive electrode of each battery of the examples, it is conceivable that the coating layer was uniform and had high ion conductivity, which reduced the number of isolated positive electrode active material particles.

In the battery of Comparative Example 3 in which the positive electrode active material having the coating layer made of only Li₃PO₄ having poor ion conductivity on the surface, it is expected that the DCR during the evaluation of initial characteristics would usually be high. However, it is conceivable that the coverage of the surface of the positive electrode active material coated with the coating layer was low, and thus in the evaluation of initial characteristics, a region where the coating layer was not formed widened, and favorable electron conductivity and ion conductivity were ensured, resulting in low DCR. Furthermore, in the evaluation of heat resistance, an oxidation reaction occurred due to heat treatment in a large region where the coating layer was not formed, resulting in the formation of the resistive layer, and thus the DCR significantly increased.

The invention may be embodied in other forms without departing from the essential characteristics thereof. The embodiments disclosed in this application are to be considered in all respects as illustrative and not limiting. The scope of the present invention should be construed in view of the appended claims, rather than the foregoing description, and all changes that come within the meaning and range of equivalency of the claims are intended to be embraced therein.

### Industrial Applicability

The all-solid-state secondary battery according to the present invention is applicable to applications similar to those for conventionally known secondary batteries, and as described above, the all-solid-state secondary battery according to the present invention has high heat resistance and thus can be preferably used in applications where the batteries are exposed to high temperature. The positive electrode for an all-solid-state secondary battery according to the present invention can constitute the all-solid-state secondary battery according to the present invention.

### Description of Reference Numerals

- 1, 100: All-solid-state secondary battery
- 10: Positive electrode
- 20: Negative electrode
- 30: Solid electrolyte layer
- 40: Exterior can
- 50: Sealing can
- 60: Gasket
- 200: Electrode body
- 300: Positive electrode external terminal
- 400: Negative electrode external terminal
- 500: Laminate-film exterior body

## Claims

1. A positive electrode for an all-solid-state secondary battery, comprising:
a positive electrode active material; and
a sulfide-based solid electrolyte,
wherein at least a portion of a surface of the positive electrode active material is coated with a coating layer having a composition that contains a compound containing a P-O bond and a compound containing a B-O bond.

2. The positive electrode for an all-solid-state secondary battery according to claim 1,
wherein a relationship between a P content and a B content in the composition satisfies P ≥ B in terms of element ratio.

3. The positive electrode for an all-solid-state secondary battery according to claim 1,
wherein the composition further contains a compound containing a S-O bond.

4. The positive electrode for an all-solid-state secondary battery according to claim 1,
wherein the coating layer has an average thickness of 1 to 100 nm.

5. The positive electrode for an all-solid-state secondary battery according to claim 1,
wherein the positive electrode active material satisfies any one of general formulas (1) to (4) below,
LiCo₁₋ₓM¹ₓO₂ (1)
in the general formula (1), M¹ represents at least one element selected from the group consisting of Al, Mg, Ti, V, Cr, Zr, Fe, Ni, Cu, Zn, Ga, Ge, Nb, Mo, Sn, Sb, and Ba, and x satisfies 0 ≤ x ≤ 0.5,
LiNi_{1-a-b}MnₐM²_{b}O₂ (2)
in the general formula (2), M² represents at least one element selected from the group consisting of Co, Mg, Al, B, Ti, V, Cr, Fe, Cu, Zn, Zr, Mo, Sn, Ca, Sr, and W, and a and b satisfy 0 < a ≤ 1, 0 ≤ b < 1, and 0 < a + b ≤ 1,
LiNi_{1-c}M³_{c}O₂ (3)
in the general formula (3), M³ represents at least one element selected from the group consisting of Al, Mg, Ti, Zr, Fe, Co, Cu, Zn, Ga, Ge, Nb, Mo, Sn, Sb, and Ba, and c satisfies 0 ≤ c ≤ 0.5, and
LiM⁴_{d}Mn_{2-d}O₄₋ₑXₑ (4)
in the general formula (4), M⁴ represents at least one element selected from the group consisting of Li, B, Mg, Ca, Sr, Ba, Ti, V, Cr, Fe, Co, Ni, Cu, Al, Sn, Sb, In, Nb, Mo, W, Y, Ru, and Rh, X represents at least one element selected from the group consisting of F, Cl, Br, and S, and d and e satisfy 0 ≤ d ≤ 1.2 and 0 ≤ e ≤ 0.5.

6. An all-solid-state secondary battery comprising:
at least one stacked body in which a positive electrode and a negative electrode face each other with a solid electrolyte layer interposed between the positive electrode and the negative electrode,
wherein the positive electrode is the positive electrode for an all-solid-state secondary battery according to any one of claims 1 to 5.
